# FASCICULE DE BREVET EUROPEEN

(11) **EP 0 820 344 B1**
(45) Date de publication et mention de la délivrance du brevet: **03.11.1999**
(21) Numéro de dépôt: 95917407.9
(22) Date de dépôt: 14.04.1995
(51) Int. Cl.: B01D 65/02

(54) **PROCEDE POUR FAIRE FONCTIONNER ET CONTROLER UN GROUPE DE MODULES DE MEMBRANES DE FILTRATION, ET GROUPE DE MODULES PERMETTANT LA MISE EN OEUVRE DU PROCEDE**
VERFAHREN ZUM BETREIBEN UND STEUERN EINER GRUPPE VON FILTRATIONSMEMBRANEMODULEN UND EINE GRUPPE VON MODULEN ZUR AUSFÜRUNG DIESES VERFAHRENS
METHOD FOR OPERATING AND CONTROLLING A BANK OF FILTRATION MEMBRANE MODULES, AND BANK OF MODULES THEREFOR

(43) Date de publication de la demande: 28.01.1998
(73) Titulaire: Aquasource, 92500 Rueil-Malmaison (FR)
(72) Inventeur: ESPENAN, Jean-Michel, F-31450 Deyme (FR); SAUX, Franc, F-31570 Sainte-Foy-d'Aigrefeuille (FR)
(74) Mandataire: Roger-Petit, Georges
(86) Numéro de dépôt international: FR9500498
(87) Numéro de publication internationale: WO9632183

(56) Documents cités:
- EP-A- 0 464 321
- FR-A- 2 187 389
- US-A- 3 747 763
- US-A- 4 708 790
- US-A- 5 227 071

## Description

L'invention concerne un procédé pour faire fonctionner et contrôler un groupe de modules de membranes de filtration, ainsi que le groupe de modules mettant en oeuvre le procédé, avec une application particulière a la filtration de l'eau.

L'obtention d'eau potable à partir des eaux naturelles (lacs, rivières) plus ou moins polluées est réalisée depuis très longtemps dans des installations fixes, compte-tenu des techniques mises en oeuvre. L'apparition récente des membranes de filtration disposées en faisceaux dans des modules de filtration a permis de réaliser des installations mobiles permettant d'intervenir en cas de défaillance de l'installation fixe ou en cas d'urgence, par exemple lors de missions humanitaires.

Les installations mobiles connues fonctionnent avec des pompes, au moins une pompe de gavage et une pompe pour le rétrolavage des membranes, pompe qui sont grosses consommatrices d'énergie électrique. Dans certains cas, les installations doivent fonctionner dans des zones non équipées en électricité et il faut prévoir des groupes électrogènes et le combustible nécessaire a leur fonctionnement.

En outre la surveillance du fonctionnement des modules de filtration est délicate à mettre en oeuvre et si l'on constate l'apparition d'anomalies, il est très difficile sinon impossible de savoir quelle en est l'origine précise: encrassement excessif, ou rupture des membranes d'un module et duquel, défaut de rétrolavage sur un module, etc...

De telles installations fonctionnent le plus souvent à la demande, c'est-à-dire qu'elles se trouvent en arrêt de production de façon périodique. Lorsqu'elles sont prévues pour des interventions ponctuelles, elles doivent pouvoir supporter en outre des périodes d'arrêt de fonctionnement prolongées. Dans les deux cas, il est alors nécessaire de prévoir la chloration des circuits afin d'éviter la prolifération de bactéries qui pourraient dégrader les membranes ou être dangereuses lors de la remise en route. La chloration s'effectue par injection par pompage périodique d'eau chlorée dans les circuits.

En situation d'urgence, l'eau à traiter peut être inhabituellement polluée et il est souvent nécessaire de procéder, en plus des rétrolavages périodiques, à des lessivages avec des produits appropriés. Il faut donc que l'installation soit équipée d'un circuit de lessivage qui exige une pompe.

On a donc besoin d'un ensemble de traitement d'eau
. compact, c'est-à-dire de volume limité par rapport à sa capacité de production, ceci afin de faciliter son transport
. ayant une faible consommation en énergie électrique, donc avec un nombre de pompes minime
. comportant avantageusement un circuit de chloration et un circuit de lessivage
. permettant de faire un diagnostic de l'état des membranes de filtration et des éventuelles anomalies de fonctionnement, et de procéder aux opérations de remise en état appropriées.

L'invention résoud le problème en utilisant, pour faire fonctionner et contrôler un groupe d'au moins quatre modules de membranes de filtration d'eau montés en parallèle, un procédé dans lequel
on introduit l'eau brute à traiter dans le groupe de modules à une pression régulée et on régule la pression de sortie du perméat (eau filtrée) à une valeur inférieure à celle de la pression d'entrée, mais suffisante pour permettre le rétrolavage des modules de membranes de filtration,
on munit le groupe de modules d'un compteur d'eau sur la conduite d'entrée de l'eau brute et de trois capteurs de pression, un premier sur l'entrée de l'eau brute, un deuxième a la sortie du perméat, et un troisième sur le circuit de rétrolavage, le compteur et les capteurs fournissant des signaux à un organe de gestion,
on effectue les rétrolavages des modules successivement l'un après l'autre, avec le perméat des autres modules, en individualisant ainsi chaque module au moment de son rétrolavage, ce qui permet à l'aide du compteur d'eau et des capteurs de pression de déterminer la perméabilité propre en rétrolavage du module ainsi individualisé et la perméabilité en production du reste des modules,
on compare les valeurs ainsi déterminées des perméabilités à des valeurs théoriques, à des valeurs de seuil et/ou aux valeurs des cycles précédents pour, selon le diagnostic obtenu, modifier la périodicité des rétrolavages, procéder à un lessivage du groupe de modules et détecter une anomalie de fonctionnement pour la corriger.

Lorsqu'il est prévu un circuit de chloration pour les périodes d'arrêt de production et un circuit de lessivage du groupe de modules, une pompe de faible capacité et donc peu consommatrice d'énergie, commune et située sur le circuit perméat, assure la circulation du produit de lessivage ou de l'eau chlorée dans chacun des circuits respectivement.

La filtration dans les modules peut se faire en mode frontal ou en mode tangentiel. En mode frontal, l'installation ne nécessite pas de pompes de recirculation. Toutefois, on peut fonctionner en mode tangentiel avec des pompes de recirculation, en utilisant par exemple une pompe par module. En procédant ainsi, au lieu de la façon classique qui utilise une seule pompe pour recirculer l'eau dans l'ensemble des modules et de la boucle de filtration, on diminue la puissance nécessaire des pompes et on peut en outre choisir de recirculer périodiquement et sur un ou plusieurs modules.

L'introduction de l'eau sous pression régulée et la régulation de la Pression de sortie permettent d'utiliser, pour le rétrolavage d'un module, l'eau filtrée par les autres modules en supprimant de ce fait le réservoir de perméat et la pompe de rétrolavage associés habituellement. On a donc ainsi un gain de place et d'énergie.

Par ailleurs, une conséquence intéressante du lavage de chaque module successivement par l'eau filtrée par l'ensemble des autres modules est qu'au moment de son rétrolavage, le module est individualisé alors que pendant tout le reste du processus, qu'il s'agisse de la production ou du rétrolavage d'un autre module, le groupe de modules se comporte comme un tout. Lorsqu'il est individualisé, on peut à l'aide des trois capteurs de pression et du compteur d'eau déterminer sa perméabilité propre Lpᵢ en rétrolavage ainsi que la perméabilité moyenne Lpₙ₋₁ du reste de modules.

En effectuant cette mesure module par module, on obtient
(Lp)ᵢ en rétrolavage pour tous les modules successivement et
(Lp)ₙ₋₁ en production pour l'ensemble des modules moins celui qui est en rétrolavage.

On peut ainsi déterminer par calcul tout dysfonctionnement module par module, en comparant la perméabilité de chacun à une valeur théorique, à une valeur seuil ou à une valeur du cycle précédent ou à la valeur moyenne de plusieurs cycles précédents. Pour la comparaison à des valeurs théoriques ou des valeurs seuil, il est nécessaire de tenir compte de la température de l'eau filtrée puisque la perméabilité est fonction de la viscosité et on prévoit donc un thermomètre sur le circuit perméat. La comparaison n'est, sauf variation brusque, pas instantanée et se fait lorsque tous les modules ont subi un rétrolavage.

Il est ainsi possible de détecter par exemple
- un encrassement trop important ce qui conduit à effectuer un lessivage de l'ensemble des modules, la différence entre perméabilité en filtration et perméabiiité en rétrolavage permettant en outre de faire un choix parmi les produits de lessivage disponibles,
- une rupture des membranes de filtration d'un module, ce qui amène à une mise hors service et à un changement de ce module,
- un dysfonctionnement d'une vanne.

Pour le lessivage, il est prévu un circuit comprenant un bac à lessive dans lequel l'opérateur place la lessive appropriée qui est choisie en fonction du type de pollution traitée et de l'état des membranes, selon les techniques connues a cet égard. Le lessivage se fait par l'intermédiaire du circuit d'eau brute, le produit de lessivage dilué dans l'eau brute étant alors filtré par les membranes qui retiennent les impuretés solides qu'il peut contenir et qui de ce fait ne pénètrent pas dans le circuit d'eau filtrée. La circulation se fait par ouverture de vannes enclenchant un effet de vide (du type trompe à eau) permettant de minimiser la puissance de mise en route et d'aspirer la lessive à travers les membranes à l'aide d'une pompe, dite circulateur, de faible consommation d'énergie. Cette pompe est placée sur le circuit perméat. Après lessivage, on procède à une vidange et à un ou plusieurs rinçages. Le compteur d'eau sert alors à paramétrer la quantité d'eau nécessaire aux rinçages selon la lessive utilisée, c'est-à-dire que l'opérateur ne pourra pas arrêter un rinçage avant que la quantité d'eau brute préalablement fixée pour ce rinçage n'ait été utilisée.

Lors des périodes d'arrêt de production (hors rétrolavage), il est nécessaire de chlorer l'installation pour éviter la prolifération de bacteries susceptibles d'endommager les membranes et de provoquer une pollution de l'eau traitée lors de la remise en service de l'installation. On met alors en circulation l'eau du circuit perméat en la faisant passer dans un appareil doseur de chlore, en utilisant le circulateur mentionné précédemment. Le chlore traversant les membranes, la totalité de l'installation est alors traitée. La chloration se fait au moment de l'arrêt de la production puis périodiquement, par exemple toutes les trois heures pendant la mise hors service. Le circulateur est utilisé alors pour faire circuler l'eau pendant un temps déterminé (quelques minutes).

Les différents circuits sont déterminés par ouverture et fermeture de vannes dont le détail sera donné ci-dessous en référence à une installation type permettant de mettre en oeuvre le procédé décrit précédemment.

Cette installation comprend les caractéristiques telles que définies dans la revendication 6, avec toute caractéristique préférée telle que définie dans les revendications dépendantes. En particulier un groupe d'au moins quatre modules montés en parallèle et alimentés en eau brute par une conduite commune sur laquelle sont montés un compteur d'eau, un régulateur de pression aval de la pression d'entrée et un capteur de pression. A la sortie des modules, le perméat ou eau traitée est collecté dans une conduite commune équipée d'un capteur de pression et d'un régulateur de pression amont de la pression de sortie. La conduite est munie en sortie d'un doseur de chlore assurant la chloration éventuelle de l'eau traitée dirigée au réseau de distribution soit directement soit par l'intermédiaire d'une bâche de réserve ou d'un château d'eau.

Le circuit de rétrolavage comprend une conduite commune relieé à la conduite commune collectant le perméat et alimentant chaque module successivement en eau de rétrolavage constituée par le perméat fournie par les autres modules par ouverture de la vanne de la conduite d'entrée d'eau de rétrolavage tandis que les autres vannes des autres conduites sont fermées, et chaque module est muni d'une conduite de sortie de l'eau de rétrolavage amenant à une conduite d'évacuation commune; et la conduite commune d'alimentation en eau de rétrolavage est équipée d'un capteur de pression. L'eau de rétrolavage est évacuée vers un égout ou le milieu naturel selon les possibilités. Le circuit de rétrolavage passe par le doseur de chlore du circuit perméat si l'eau de rétrolavage est à chlorer, la chloration en rétrolavage pouvant de manière connue améliorer l'efficacité de celui-ci. Le capteur de pression sur l'alimentation du circuit de rétrolavage coopère avec le compteur d'eau pour déterminer la perméabilité Lpᵢ en rétrolavage du module en cours de rétrolavage, et le capteur de pression du circuit perméat coopère avec le capteur de pression du circuit d'entrée et le compteur d'eau pour déterminer la perméabilité (Lp)ₙ₋ᵢ en production.

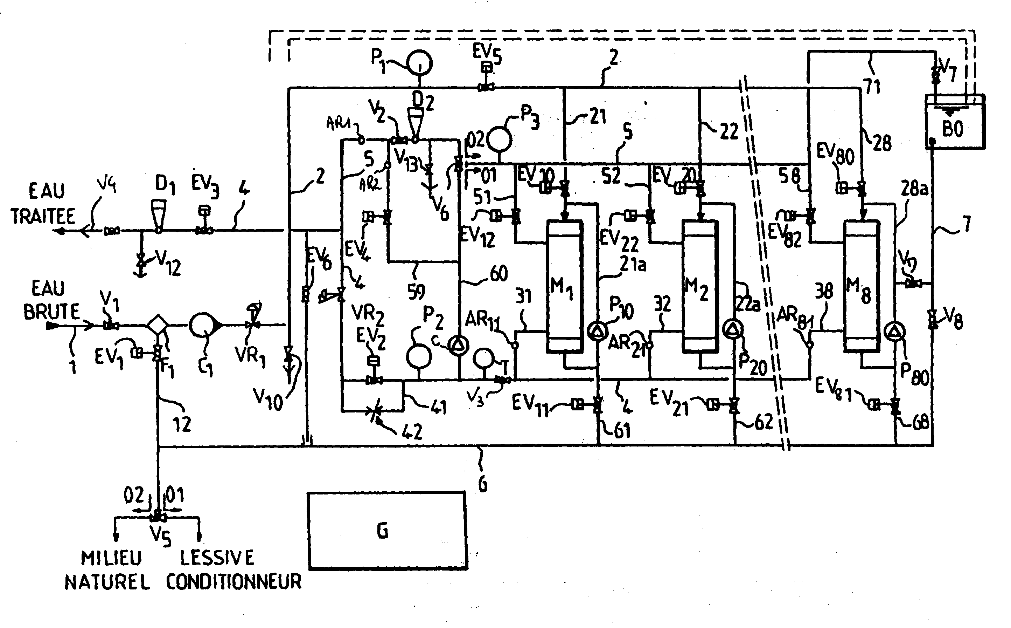

D'autres caractéristiques et avantages du procédé et de l'installation apparaîtront à la lecture de la description détaillée de l'invention faite ci-dessous en référence au dessin qui représente les différents circuits de fonctionnement d'une installation selon l'invention.

La conduite d'alimentation en eau brute 1 amène l'eau à traiter sous pression à la vanne d'entrée V₁ de l'installation. La pression d'entrée est obtenue soit par une pompe soit de préférence de façon naturelle : conduite forcée en montagne, positionnement de l'installation en contrebas d'un lac naturel ou de barrage, cours d'eau à fort débit. Un prefiltre F₁ à nettoyage automatique conduit l'eau à traiter à un compteur d'eau C₁, par exemple à tête émettrice d'impulsions relié à un organe de gestion G (pour simplifier le schéma, les liaisons entre organes capteurs, organes actionnés et organe de gestion ne sont pas représentées), puis dans un régulateur de pression aval VR₁ où la pression de l'eau est régulée à une valeur d'entrée constante, par exemple à 3,2 bar. L'eau passe ensuite dans une conduite 2 commune qui dessert l'ensemble des modules de filtration M₁ à Mₙ par l'intermédiaire d'une vanne EV₅. Dans l'exemple représenté, n vaut 8. Pour qu'un module puisse être rétrolavé par le perméat des autres modules, il faut un nombre minimal de modules, quatre ou cinq en général, pour fournir la quantité d'eau nécessaire. Lorsqu'on utilise un nombre de modules supérieur, la quantité d'eau introduite sera réduite par le système à organe limitateur de débit ci-dessus décrit.

L'organe de gestion peut être remplacé par un simple enregistreur et c'est un opérateur qui calcule les valeurs de la perméabilité et fait les comparaisons nécessaires. Dans l'exemple représenté, l'organe de gestion reçoit les signaux, les traite et les compare grâce à un logiciel approprié.

Chaque module (M₁...M₈) est alimenté par une conduite 21,...28 équipée d'une vanne EV₁₀...EV₈₀. Leur conduite de sortie perméat 31...38 équipée chacune d'un clapet anti-retour AR₁₁...AR₈₁ amène le perméat à une conduite commune 4 qui est munie d'un thermomètre T, et en sortie d'une vanne EV₃ puis d'un doseur de chlore D₁ pour chlorer l'eau traitée à distribuer selon les besoins du réseau de distribution. Un régulateur de pression amont VR₂ règle la pression de sortie à une valeur infèrieure à la pression d'entrée, par exemple à 2,5 bar.

Chaque conduite 21,...28 comporte une dérivation 21a,...,28a qui permet, en mode de fonctionnement frontal, d'alimenter les modules en eau à traiter ou d'évacuer l'eau de rétrolavage, à leurs deux extrémités. Ceci permet d'éviter la formation d'une zone de forte concentration des impuretés retenues à l'entrée d'un module et facilite donc le rétrolavage. Ces dérivations peuvent comporter chacune une pompe de recirculation P₁₀,...,P₈₀ qui permet si on le souhaite de faire fonctionner les modules en mode tangentiel.

Avant d'effectuer un rétrolavage, on procède à un nettoyage du préfiltre F₁, à l'aide d'une conduite d'évacuation 12 munie d'une vanne EV₁.

Pour le rétrolavage périodique déclenché par exemple toutes les 45 minutes, la vanne EV₁₀ (celle correspondant au module lavé) est fermée ainsi que la vanne EV₃. L'eau filtrée des modules 2 à 8 passe de ce fait par une conduite 5 équipée d'un doseur de chlore D₂ et d'une vanne trois voies V₆ en position O2. Pour son rétrolavage, chaque module est relié à la conduite 5 par une conduite 51...58 munie d'une vanne EV₁₂...EV₈₂. Au moment du rétrolavage du module M₁, la vanne associée EV₁₂ est ouverte et les vannes EV₂₂...EV₈₂ sont fermées. L'eau filtrée par les modules M₂ à M₈ rétrolave le module M₁ et est évacuée par la conduite 61 équipée d'une vanne EV₁₁ (ouverte) vers la conduite commune 6 d'évacuation. Les modules sont lavés successivement par ouverture et fermeture des vannes correspondantes désignées par les indices correspondants, avec évacuation de l'eau de rétrolavage par les conduites 62,...68 vers la conduite 6.

Les capteurs de pression P₁ sur la conduite 2, P₂ sur la conduite 4 et P₃ sur la conduite 5 permettent en coopération avec le compteur C₁ de faire les mesures de perméabilité décrites précédemment.

Lorsque celles-ci effectuées pendant le rétrolavege successif des modules indiquent qu'il est nécessaire de faire un lessivage, on met l'installation en position arrêt et l'on ferme les vannes V₁ et V₄ pour l'isoler de l'alimentation en eau brute et du réservoir d'eau traitée. Un bec à lessive BO est relié par une conduite 7 munie d'une vanne V₉ au dernier module de filtration M₈. En variante, le bec peut être relié à un ou plusieurs autres modules ou à l'ensemble par l'intermédiaire de la conduite commune 2. Une conduite 71 munie d'une vanne V₇ prélève une partie de l'eau circulent dans la conduite 5 pour l'amener au bac à lessive BO. La vanne V₆ étant dans la position de lessivage (flèche numérotée 01 sur la figure), l'ouverture des vannes V₇ et V₉ et la mise en route du circulateur C provoquent l'aspiration progressive de la lessive dans le circuit et donc le lessivage des modules. Il est ensuite procédé à une vidange et à un ou plusieurs rinçages de l'installation avant sa remise en production. La conduite 6 est munie d'une vanne trois voies V₅ évacuent soit dans le milieu naturel (position O2) soit dans un réservoir de récupération de lessive si celle-ci ne convient pas au milieu naturel (position O1).

Lorsque l'installation est en attente de production, c'est-à-dire lorsque le réservoir d'eau traitée extérieur à l'installation est plein et qu'il n'y à pas de demande en eau, l'installation subit une chloration périodique afin d'éviter la prolifération des bactéries dans le circuit de perméat. A cet effet, le circulateur C se met en route avec ouverture ou fermeture selon les cas des vannes appropriées et l'eau circule dans les conduites 4 et 5 en traversant les modules et en passant par le doseur de chlore D₂, pendant par exemple de 1 à 4 minutes et avec une périodicité de par exemple environ 3 heures.

En dehors des vannes susmentionnées, le système comprend également une vanne EV₆ utilisée pour la vidange avant rinçage effectuée consécutivement à un lessivage, des Vannes V₁₀ et V₁₂ de prélèvement d'échantillons d'eau brute et d'eau traitée respectivement et une vanne V₁₃ de décompression du doseur de chlore D₂.

La conduite de sortie 4 du perméat est équipée d'une vanne EV₂ et d'une conduite de dérivation 41 avec un organe limiteteur de débit 42 qui permet à l'installation de fonctionner avec un débit limité. L'installation essaiera de repartir en débit fort de temps à autre pour déterminer si le pointe de pollution est passée. Si elle n'y arrive pas, une alarme est enclenchée pour prévenir un opérateur qui viendra procéder à un lessivage ou à un arrêt de l'installation si la ressource d'eau brute se révèle trop polluée.

Dans le cas où se présente une forte pollution de nature passagère, les membranes s'encrassent rapidement et leur perméabilité diminue très rapidement. Afin de ne pas les surcharger, ce qui pourrait aboutir à un arrêt complet de le production d'eau filtrée, l'installation fonctionnera en débit bas. Lorsque cette indication de débit bas est constatée par le compteur C₁, le vanne EV₂ se ferme et l'eau filtrée passe alors par l'organe limitateur de débit 42.

Le tableau ci-dessous résume les états des différents organes pendant les phases du fonctionnement de l'installation.

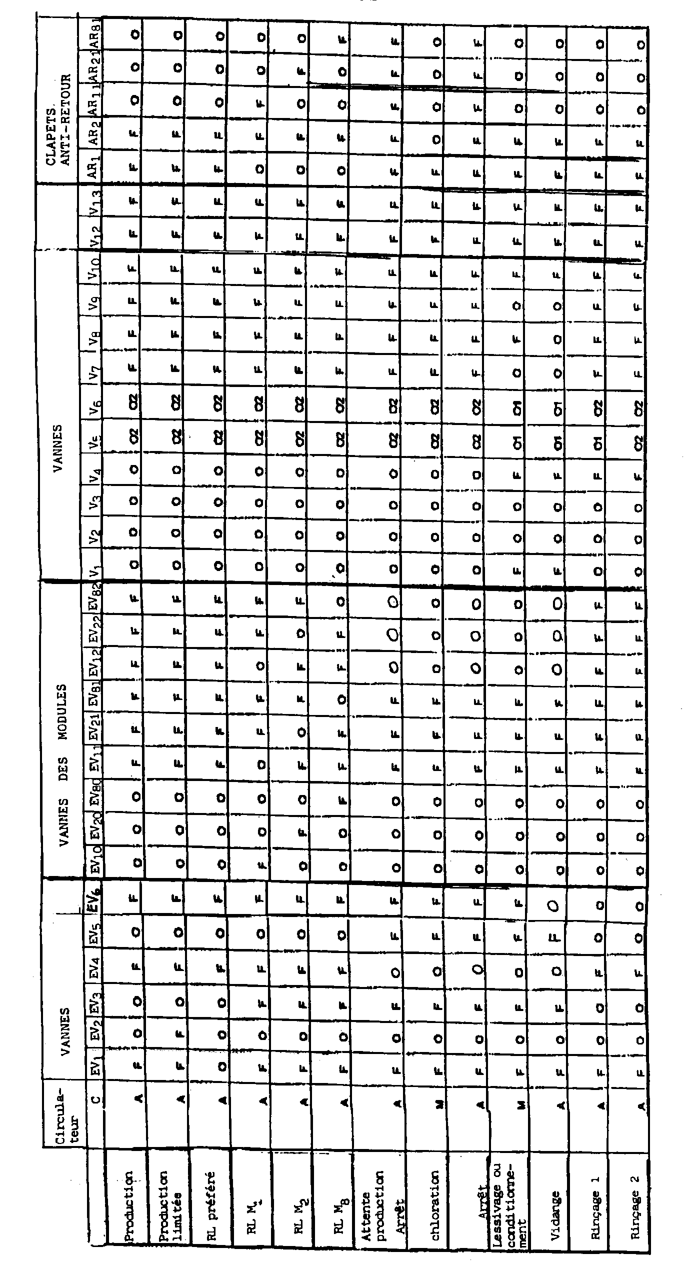

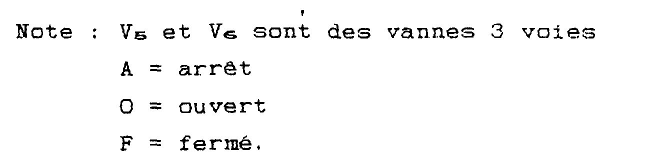

Les clapets anti-retour peuvent être remplacés par des vannes mais sont plus économiques que celles-ci.

On notera que les vannes EV₁ à EV₆, ainsi que les vannes EV₁₀ à EV₈₀ permettant l'entrée en eau brute dans les modules M₁ à M₈, les vannes EV₁₁ à EV₈₁ permettant la sortie d'eau brute des modules M₁ à M₈ et les vannes EV₁₂ à EV₈₂ permettant l'entrée de l'eau de rétrolavage dans les modules M₁ à M₈ sont des electrovannes automatiques. Selon une autre variante, toutes les vannes précédentes peuvent être à commande hydraulique ou pneumatique. Les vannes V₁ à V₁₃ peuvent être des vannes à commande manuelle, exigeant alors la présence d'un opérateur pour la réalisation de certaines phases du fonctionnement. On voit d'après le tableau précédent que la position de ces vannes n'est a modifier qu'au moment d'un lessivage et des opérations ultérieures de vidange et de rinçage.

Les vannes V₁ à V₉ peuvent également être gérées par l'organe de gestion G lorsque celui-ci non seulement fournit la perméabilité de chaque module directement en rétrolavage et la perméabilité moyenne en production des autres modules, mais encore détermine par calcul sa perméabilité en production et effectue la comparaison à une valeur théorique, une valeur seuil et/ou à la valeur pendant le cycle précédent ou à la valeur moyenne pendant plusieurs cycles précédents, grâce à un logiciel approprié. Les vannes V₁ à V₉ peuvent être à commande électrique, bydraulique ou pneumetique. Différents types de commande peuvent être combinés.

Ces vannes V₁₀ et V₁₂ qui sont des vannes de prélèvement d'échantillons d'eau brute et d'eau traitée respectivement sont manuelles. V₁₃ est une vanne de décompression du système chlore.

Si l'installation nécessite un conditionnement, (traitement par un conditionneur selon les besoins du traitement), on utilise pour le faire le circuit de lessivage.

Selon les besoins en chlore de l'installation et les exigences des réglementations locales en matière de chlore résiduel dans l'eau traitée, différents types de doseurs de chlore peuvent être utilisés mais on peut avantageusement utiliser les doseurs statiques.

## Revendications

1. Procédé de fonctionnement et de contrôle d'un groupe d'au moins quatre modules de membranes de filtration d'eau montés en parallèle avec rétrolavage périodique des modules, caractérisé en ce que
on introduit l'eau brute à traiter dans le groupe de modules à une pression régulée et on régule la pression de sortie du perméat (eau filtrée) à une valeur inférieure à celle de la pression d'entrée, mais suffisante pour permettre les opérations de rétrolavage,
on munit le groupe de modules d'un compteur d'eau sur la conduite d'entrée de l'eau brute et de trois capteurs de pression, un premier sur l'entrée de l'eau brute, un deuxième à la sortie du perméat, et un troisième sur le circuit de rétrolavage, le compteur et les capteurs fournissant des signaux à un organe de gestion,
on effectue les rétrolavages des modules successivement l'un après l'autre, avec le perméat des autres modules, en individualisant ainsi chaque module au moment de son rétrolavage, ce qui permet à l'aide du compteur d'eau et des capteurs de pression de déterminer la perméabilité propre en rétrolavage du module ainsi individualisé et la perméabilité en production du reste des modules,
on compare les valeurs ainsi déterminées des perméabilités à des valeurs théoriques, à des valeurs de seuil et/ou aux valeurs des cycles précédents pour, selon le diagnostic obtenu, modifier la périodicité des rétrolavages, procéder à un lessivage du groupe de modules et détecter une anomalie de fonctionnement pour la corriger.

2. Procédé selon la revendication 1, caractérisé en ce qu'on prévoit un lessivage du groupe de modules et une chloration du circuit pendant les arrêts prolongés de la production du groupe de modules, une pompe commune sur le circuit perméat assurant la circulation dans le circuit de lessivage ou la circulation dans le circuit de chloration.

3. Procédé selon la revendication 2, caractérisé en ce que, par mise en route de ladite pompe commune et ouverture de vannes du circuit de lessivage, on provoque l'aspiration d'un produit de lessivage dans le circuit de lessivage et au travers des membranes de filtration.

4. Procédé selon l'une quelconque des revendications 1 à 3, caractérisé en ce que les signaux de pression et de comptage sont fournis à un opérateur qui calcule les perméabilités, les compare aux valeurs de référence retenues et procède au lessivage éventuellement nécessaire.

5. Procédé selon l'une quelconque des revendications 1 à 3, caractérisé en ce que les signaux de pression et de comptage sont fournis à un organe de gestion comprenant un microprocesseur dont le logiciel calcule les perméabilités, les compare aux valeurs de référence retenues et procède de façon automatique au lessivage éventuellement nécessaire.

6. Installation de traitement d'eau comportant un groupe d'au moins quatre modules de membranes de filtration pour la mise en oeuvre du procédé selon l'une quelconque des revendications 1 à 5, dans laquelle un groupe de modules (M₁,...Mₙ) montés en parallèle sont alimentés en eau brute par des conduites individuelles (21,...,28) branchées sur une conduite commune (1 ; 2) équipée d'un compteur d'eau (C₁), d'un régulateur de pression aval (VR₁) et d'un capteur de pression d'entrée (P₁), le perméat de chaque module étant amené à une conduite commune (4) équipée d'un capteur de pression de sortie (P₂) et d'un régulateur de pression amont (VR₂) ; un circuit de rétrolavage comprend une conduite commune (5) reliée à la conduite de sortie de perméat (4) et alimentant chaque module (Mᵢ) successivement en eau de rétrolavage, constituée du perméat des autres modules, par une conduite (5i) d'entrée d'eau de rétrolavage, chaque conduite (5i) étant munie d'une vanne (EVᵢ₂), et chaque module (Mᵢ) étant muni d'une conduite de sortie (6i) de l'eau de rétrolavage amenant à une conduite d'évacuation commune (6) ; et la conduite commune d'alimentation en eau de rétrolavage (5) est équipée d'un capteur de pression (P₃).

7. Installation selon la revendication 6, caractérisée en ce qu'un circuit de lessivage comporte un bac à lessive (BO) relié par une conduite (7) munie d'une vanne (V₉) à l'alimentation en eau brute d'au moins un module et à la conduite d'évacuation (6) par une vanne (V₈), une conduite (71) munie d'une vanne (V₇) prélevant du perméat de la conduite commune d'alimentation en eau de rétrolavage (5), et un circuit de chloration comporte un doseur de chlore (D₂) sur ladite conduite commune d'alimentation (5) ; une conduite (60) équipée d'une pompe de circulation (C) reliant la conduite commune (5) d'alimentation en eau de rétrolavage et la conduite commune (4) d'évacuation du perméat de manière que le circuit de chloration et le circuit de lessivage utilisent une même pompe de circulation (C).

8. Installation selon l'une quelconque des revendications 6 ou 7, caractérisée en ce que les conduites individuelles (21,...,28) d'alimentation en eau brute des modules (M₁,...,M₈) comportent chacune une dérivation (21a,...,28a) reliée à une deuxième extrémité du module.

9. Installation selon la revendication 8, caractérisée en ce que lesdites conduites de dérivation (21a,...,28a) sont équipées de pompes de recirculation (P₁₀,...,P₈₀).

10. Installation selon l'une quelconque des revendications 6 à 9, caractérisée en ce que le doseur de chlore (D₂) du circuit de chloration est un doseur de chlore statique.

11. Installation selon l'une quelconque des revendications 6 à 10, caractérisée en ce que les vannes sont choisies parmi les vannes à commande manuelle, les vannes à commande électrique, les vannes à commande hydraulique, les vannes à commande pneumatique et les combinaisons de ces différents types.

## Claims

1. A method of operating and monitoring a group of at least four water filtration membrane modules mounted in parallel with the modules being backwashed periodically, the method being characterized in that:
raw water to be treated is introduced into the group of modules at a regulated pressure and the outlet pressure of the permeate (filtered water) is regulated to a value that is lower than that of the inlet pressure, but nevertheless sufficient to enable backwashing operations,
the group of modules is provided with a water meter on the raw water inlet duct and with three pressure sensors, a first on the raw water inlet, a second at the permeate outlet, and a third on the backwashing circuit, the meter and the sensors delivering signals to a control device,
the modules are backwashed successively one after another, with the permeate from the other modules, thereby individualizing each module while it is being backwashed, thus making it possible with the aid of the water meter and the pressure sensors to determine the permeability in backwashing specific to the module thus individualized, and to determine the production permeability of the remaining modules,
the permeability values obtained in this way are compared with theoretical values, with threshold values, ad/or with values from the preceding cycles so that, depending on the diagnosis obtained, the periodicity of backwashing is modified, the group of modules is cleaned, or an operating anomaly is detected with a view to its correction.

2. A method according to Claim 1, characterized in that the group of modules is cleaned and the circuit is chlorinated during prolonged stops in production from the group of modules, a common pump on the permeate circuit providing circulation in the cleaning circuit or circulation in the chlorination circuit.

3. A method according to Claim 2, characterized in that by setting into motion said common pump and by opening valves of the cleaning circuit, a cleaning substance is caused to be sucked into the cleaning circuit and through the filtration membranes.

4. A method according to any one of Claims 1 to 3, characterized in that the pressure and meter signals are delivered to an operator who calculates the permeabilities, compares them with specified reference values, and proceeds with cleaning when necessary.

5. A method according to any one of Claims 1 to 3, characterized in that the pressure and meter signals are delivered to a control device including a microprocessor whose software calculates the permeabilities, compares them with specified reference values, and proceeds in an automatic manner with cleaning when necessary.

6. A water treatment installation comprising a group of at least four filtration membrane modules for implementing the method according to any one of Claims 1 to 5, in which a group of modules (M1, ..., Mₙ) mounted in parallel are fed with raw water via individual ducts (21, ..., 28) branching from a common duct (1; 2) fitted with a water meter (C₁), with a downstream pressure regulator (VR₁) and with an inlet pressure sensor (P₁), the permeate from each module being conveyed to a common duct (4) fitted with an outlet pressure sensor (P₂) and with an upstream pressure regulator (VR₂): a backwash circuit comprises a common duct (5) connected to the permeate outlet duct (4) and feeding each module (Mᵢ) in succession with backwash water constituted by the permeate from the other modules, by a backwash water inlet duct (5ᵢ), each duct (5ᵢ) being provided with a valve (EVᵢ₂), and each module (Mᵢ) being provided with an outlet duct (6ᵢ) for the backwash water leading to a common drain duct (6); and the common backwater wash feed duct (5) is fitted with a pressure sensor (P₃).

7. An installation according to Claim 6, characterized in that a cleaning circuit includes a cleaning substance pan (BO) connected by a duct (7) provided with a valve (V₉) for feeding raw water to at least one module and to the drain duct (6) via a valve (V₈), a duct (71) provided with a valve (V₇) for taking permeate from the common backwash water feed duct (5), and in that a chlorination circuit includes a chlorine dispenser (D₂) on said common feed duct (5); a duct (60) fitted with a circulation pump (C) connecting the common backwash water feed duct (5) and the common permeate drain duct (4) in such a way that the chlorination circuit and the cleaning circuit use the same circulation pump (C).

8. An installation according to any one of Claims 6 or 7, characterized in that the individual raw water feed ducts (21, ..., 28) for the modules (M₁ ,..., M₈) each include a branch (21a, ... 28a) connected to a second end of the module.

9. An installation according to Claim 8, characterized in that said branch ducts (21a, ... 28a) are fitted with recirculating pumps (P₁₀, ..., P₈₀).

10. An installation according to any one of Claims 6 to 9, characterized in that the chlorine dispenser (D₂) of the chlorination circuit is a static chlorine dispenser.

11. An installation according to any one of Claims 6 to 10, characterized in that the valves are selected from manually-controlled valves, electrically-controlled valves, hydraulically-controlled valves, pneumatically-controlled valves, and combinations of these different types.

## Patentansprüche

1. Verfahren zum Betreiben und Überprüfen einer Gruppe von wenigstens vier Filtermembranmodulen für Wasser, die parallel mit periodischer Rückwärtsspülung der Module angeordnet sind, dadurch gekennzeichnet, daß
man in der Gruppe von Modulen zu behandelndes Rohwasser unter einem geregelten Druck einbringt und den Ausgangsdruck des Permeats (filtriertes Wasser) auf einen Wert regelt, der niedriger ist als der Eingangsdruck, jedoch ausreichend ist, um die Betriebsvorgänge der Rückwärtsspülung zu erlauben,
man die Gruppe der Module mit einem Wasserzähler in der Eingangsleitung des Rohwassers und mit drei Druckfühlern, einem ersten am Eingang des Rohwassers, einem zweiten am Ausgang des Permeats und einem dritten im Rückwärtsspülungskreis versieht, wobei der Zähler und die Fühler Signale an ein Steuerungsorgan abgeben,
man die Rückwärtsspülungen der Module nacheinander eins nach dem anderen mit dem Permeat der anderen Module bewirkt, indem man so jedes Modul zum Zeitpunkt seiner Rückwärtsspülung vereinzelt, was es ermöglicht, mit Hilfe des Wasserzählers und der Druckfühler die Durchlässigkeit bei der Rückwärtsspülung des so vereinzelten Moduls und die Durchlässigkeit beim Betrieb des Rests der Module zu bestimmen,
man die so bestimmten Werte der Durchlässigkeiten mit theoretischen Werten, mit Schwellenwerten und/oder mit Werten vorhergehender Zyklen vergleicht, um entsprechend der erhaltenen Diagnose die Periodizität der Rückwärtsspülungen abzuwandeln, eine Auslaugung der Gruppe von Modulen vorzunehmen und eine Betriebsanomalie festzustellen, um sie zu korrigieren.

2. Verfahren nach Anspruch 1, dadurch gekennzeichnet, daß man eine Auslaugung der Gruppe der Module und eine Chlorierung des Kreises während längerer Produktionsstillstände der Gruppe der Module vorsieht, wobei eine gemeinsame Pumpe in dem Permeatkreis das Zirkulieren in dem Auslaugungskreis oder das Zirkulieren in dem Chlorierungskreis sicherstellt.

3. Verfahren nach Anspruch 2, dadurch gekennzeichnet, daß man durch Ingangsetzen der gemeinsamen Pumpe und durch Öffnen der Ventile des Auslaugungskreises das Ansaugen eines Auslaugungserzeugnisses in den Auslaugungskreis und durch die Filtriermembranen bewirkt.

4. Verfahren nach einem der Ansprüche 1 bis 3, dadurch gekennzeichnet, daß die Drucksignale und die Zählsignale zu einem Rechner geliefert werden, der die Durchlässigkeiten berechnet, sie mit festgehaltenen Bezugswerten vergleicht und die möglicherweise notwendige Auslaugung vornimmt.

5. Verfahren nach einem der Ansprüche 1 bis 3, dadurch gekennzeichnet, daß die Druck- und Zählsignale zu einem Steuerungsorgan geliefert werden, das einen Mikroprozessor aufweist, dessen Software die Durchlässigkeiten berechnet, sie mit festgehaltenen Bezugswerten vergleicht und in automatischer Weise die möglicherweise notwendige Auslaugung vornimmt.

6. Behandlungsvorrichtung für Wasser, die eine Gruppe von wenigstens vier Filtermembranmodulen für die Durchführung des Verfahrens nach einem der Ansprüche 1 bis 5 aufweist, in der eine Gruppe von Modulen (M₁, ..., Mₙ), die parallel angeordnet sind, mit Rohwasser durch einzelne Leitungen (21, ..., 28) gespeist werden, die auf einer gemeinsamen Leitung (1; 2) verzweigt sind, die mit einem Wasserzähler (C₁), einem unterstromigen Druckregler (VR₁) und einem Eingangsdruckfühler (P₁) versehen ist, wobei das Permeat jedes Moduls zu einer gemeinsamen Leitung (4) geleitet wird, die mit einem Ausgangsdruckfühler (P₂) und einem oberstromigen Druckregulator (VR₂) versehen ist; ein Rückwärtsspülungskreis eine gemeinsame Leitung (5) aufweist,die mit der Ausgangsleitung des Permeats (4) verbunden ist, und die jedes Modul (Mᵢ) nacheinander mit Rückwärtsspülungswasser, das durch das Permeat der anderen Module gebildet wird, durch eine Eingangsleitung (5ᵢ) für Rückwärtsspülungswasser speist, wobei jede Leitung (5ᵢ) mit einem Ventil (EVᵢ₂)versehen ist und jedes Modul (Mᵢ) einer Ausgangsleitung (6ᵢ) für das Rückwärtsspülungswasser versehen ist, die zu einer gemeinsamen Entleerungsleitung (6) führt; und die gemeinsame Speiseleitung (5) für Rückwärtsspülungswasser mit einem Druckaufnehmer (P₃) versehen ist.

7. Vorrichtung nach Anspruch 6, dadurch gekennzeichnet, daß ein Auslaugungskreis einen Waschlaugenbehälter (BO) aufweist, der über eine mit einem Ventil (V₉) versehene Leitung (7) mit der Rohwasserspeisung wenigstens eines Moduls und mit der Entleerungsleitung (6) über ein Ventil (V₈) verbunden ist, wobei eine mit einem Ventil (V₇) versehene Leitung (71) Permeat aus der gemeinsamen Speiseleitung für Rückwärtsspülungswasser (5) entnimmt, und einen Chlorierungskreis eine Dosiereinrichtung (D₂) für Chlor auf der gemeinsamen Versorgungsleitung (5) aufweist; wobei eine mit einer Zirkulationspumpe (C) ausgerüstete Leitung (60) die gemeinsame Speiseleitung (5) für Rückwärtsspülungswasser und die gemeinsame Entleerungsleitung (4) für das Permeat in der Weise verbindet, daß der Chlorierungskreis und der Auslaugungskreis dieselbe Zirkulationspumpe (C) verwenden.

8. Vorrichtung nach einem der Ansprüche 6 oder 7, dadurch gekennzeichnet, daß die einzelnen Speiseleitungen (21, ..., 28) für Rohwasser der Module (M₁, ..., M₈) jeweils eine Zweigleitung (21a, ..., 28a) aufweisen, die mit einem zweiten Ende des Moduls verbunden ist.

9. Vorrichtung nach Anspruch 8, dadurch gekennzeichnet, daß die Zweigleitungen (21a, ..., 28a) mit Rezirkulationspumpen (P₁₀, ..., P₈₀) versehen sind.

10. Vorrichtung nach einem der Ansprüche 6 bis 9, dadurch gekennzeichnet, daß die Dosiereinheit für Chlor (D₂) des Chlorierungskreises eine statische Dosiereinheit für Chlor ist.

11. Vorrichtung nach einem der Ansprüche 6 bis 10, dadurch gekennzeichnet, daß die Ventile ausgewählt sind unter handbetätigten Ventilen, elektrisch betätigten Ventilen, hydraulisch betätigten Ventilen, pneumatisch betätigten Ventilen und Kombinationen dieser unterschiedlichen Typen.
